# EUROPÄISCHE PATENTSCHRIFT

(11) **EP 2 979 906 B1**
(45) Veröffentlichungstag und Bekanntmachung des Hinweises auf die Patenterteilung: **28.11.2018**
(21) Anmeldenummer: 15173761.6
(22) Anmeldetag: 25.06.2015
(51) Int. Cl.: B60J 1/20

(54) **BESCHATTUNGSVORRICHTUNG FÜR EIN TRANSPARENTES FLÄCHENTEIL EINES KRAFTFAHRZEUGS**
SHADING DEVICE FOR A TRANSPARENT SURFACE OF A MOTOR VEHICLE
DISPOSITIF D'OMBRAGE POUR UNE PARTIE PLATE TRANSPARENTE D'UN VEHICULE AUTOMOBILE

(30) Priorität: 01.08.2014 DE 102014215150
(43) Veröffentlichungstag der Anmeldung: 03.02.2016
(73) Patentinhaber: BOS GmbH & Co. KG, 73760 Ostfildern (DE)
(72) Erfinder: Maier, Matthias, 73733 Esslingen (DE); Walter, Herbert, 73061 Ebersbach (DE)
(74) Vertreter: Patentanwälte Ruff, Wilhelm, Beier, Dauster & Partner mbB

(56) Entgegenhaltungen:
- EP-B1- 1 582 386
- EP-B1- 1 800 922
- DE-A1-102012 222 658

## Beschreibung

Die Erfindung betrifft eine Beschattungsvorrichtung für ein transparentes Flächenteil eines Kraftfahrzeugs mit einem flexiblen Beschattungsgebilde, das zwischen einer kompakt abgelegten Ruheposition und einer das transparente Flächenteil verdeckenden Beschattungsposition in einem Fahrzeuginnenraum verlagerbar ist, mit zwei fahrzeugfesten, nicht-parallelen seitlichen Führungsanordnungen, die einen Verlagerungsweg des Beschattungsgebildes auf gegenüberliegenden Seiten flankieren, sowie mit einem formstabilen Auszugprofil, das an einem in Auszugrichtung vorderen Stirnendbereich des Beschattungsgebildes angeordnet ist, wobei das Auszugprofil an seinen gegenüberliegenden Stirnseiten mittels jeweils eines Führungsschlittens in der jeweiligen seitlichen Führungsanordnung mithilfe von Antriebsmitteln parallel verlagerbar ist, die an den Führungsschlitten angreifen, und wobei seitliche Beschattungsgebildeabschnitte abhängig von dem Verlagerungsweg des Beschattungsgebildes in fahrzeugfeste seitliche Aufnahmeräume eintauchen, die den gegenüberliegenden Führungsanordnungen zugeordnet sind.

Eine derartige Beschattungsvorrichtung ist aus der EP 1 800 922 B1 bekannt. Die bekannte Beschattungsvorrichtung ist einer Heckscheibenanordnung eines Personenkraftwagens zugeordnet und weist ein flexibles Beschattungsgebilde auf, das bahnförmig auf einer Wickelwelle auf- und abwickelbar gehalten ist, die unterhalb einer Hutablage des Fahrzeuginnenraums drehbar gelagert ist. Dem Beschattungsgebilde ist an seinem in Auszugrichtung vorderen Stirnendbereich ein Auszugprofil zugeordnet, das mithilfe von Antriebsmitteln in fahrzeugfesten seitlichen Führungsanordnungen zwischen der Ruhestellung des Beschattungsgebildes und der Beschattungsstellung des Beschattungsgebildes parallel verlagerbar ist. Die fahrzeugfesten seitlichen Führungsanordnungen sind nicht-parallel zueinander ausgerichtet. Das Beschattungsgebilde weist eine im Wesentlichen rechteckige Bahnform auf. Das Auszugprofil ist mithilfe von Führungsschlitten in den gegenüberliegenden seitlichen Führungsanordnungen längsverschiebbar geführt. Hierzu sind in den gegenüberliegenden seitlichen Führungsanordnungen entsprechende Führungskanäle vorgesehen. In den Führungskanälen verlaufen Flexwellen der Antriebsmittel, die die Führungsschlitten verschieben. Zudem umfassen die seitlichen Führungsanordnungen Aufnahmeräume, in die die seitlichen Beschattungsgebildeabschnitte eintauchen, die stirnseitig durch die seitlichen Führungsbandabschnitte des Querführungsbands stabilisiert sind.

Aufgabe der Erfindung ist es, eine Beschattungsvorrichtung der eingangs genannten Art zu schaffen, die einfach und kompakt aufgebaut ist.

Diese Aufgabe wird dadurch gelöst, dass jede seitliche Führungsanordnung und der zugeordnete Aufnahmeraum in jeweils einer fahrzeugfesten Gehäusekonstruktion integriert sind, die einen gemeinsamen Führungsschlitz für einen Durchtritt des Führungsschlittens vom Auszugprofil zum Antriebsmittel und des jeweiligen seitlichen Beschattungsgebildeabschnitts zum Aufnahmeraum aufweist, wobei der Führungsschlitz längs des Verlagerungswegs des Beschattungsgebildes verläuft und zu diesem hin offen ist. Durch die erfindungsgemäße Lösung ist lediglich noch ein einzelner Führungsschlitz im Bereich jeder seitlichen Führungsanordnung vorgesehen, über den sowohl die Verlagerung des Führungsschlittens als auch der Durchtritt seitlicher Beschattungsgebildeabschnitte des Beschattungsgebildes erfolgt. Dies ermöglicht einen einfachen Aufbau der Gehäusekonstruktion. Zudem ist hierdurch eine kompakte Gestaltung der Gehäusekonstruktion erzielbar. Dadurch, dass sowohl die jeweilige seitliche Führungsanordnung als auch der zugeordnete Aufnahmeraum auf jeder Seite in jeweils einer fahrzeugfesten Gehäusekonstruktion integriert sind, ist eine einfache und toleranzarme Vormontage der Beschattungsvorrichtung ermöglicht. Die erfindungsgemäße Lösung eignet sich in besonders vorteilhafter Weise für die Beschattung einer Heckscheibenanordnung eines Personenkraftwagens. Die erfindungsgemäße Beschattungsvorrichtung kann jedoch auch für andere transparente Flächenteile des Fahrzeuginnenraums wie Seiten- oder Frontscheiben oder transparente Dachteile vorgesehen sein.

In Ausgestaltung der Erfindung sind die gegenüberliegenden Führungsschlitze jeweils zumindest weitgehend geradlinig erstreckt und in einer gemeinsamen Ebene angeordnet, die einer Ausziehebene des Beschattungsgebildes zwischen der Ruheposition und der Beschattungsposition entspricht. Unter der zumindest weitgehend geradlinigen Erstreckung der Führungsschlitze und damit der seitlichen Führungsanordnungen sind Längserstreckungen zwischen 0 und 2% Krümmung zu verstehen. Die Anordnung der Führungsschlitze in der Ausziehebene des Beschattungsgebildes ermöglicht ein sicheres Aus- und Einfahren des Beschattungsgebildes relativ zur Ruheposition und ein sicheres Eintauchen der seitlichen Beschattungsgebildeabschnitte in die Aufnahmeräume der fahrzeugfesten Führungsanordnungen.

In weiterer Ausgestaltung der Erfindung sind die Führungsschlitze zu den Aufnahmeräumen der Gehäusekonstruktionen hin offen. Dadurch ist beidseitig des Beschattungsgebildes gewährleistet, dass die seitlichen Beschattungsgebildeabschnitte zusammen mit den seitlichen Führungsbandabschnitten des Querführungsbands die Führungsschlitze sicher durchdringen und in die Aufnahmeräume eintauchen können.

In weiterer Ausgestaltung der Erfindung sind in jeder Gehäusekonstruktion ein Aufnahmeraum für eine Linearführung eines Antriebsübertragungsstrangs der Antriebsmittel und ein Aufnahmeraum für das Eintauchen des jeweiligen seitlichen Beschattungsgebildeabschnitts vorgesehen, wobei der Aufnahmeraum für den Antriebsübertragungsstrang oberhalb des Führungsschlitzes und der Aufnahmeraum für den Beschattungsgebildeabschnitt seitlich benachbart oder unterhalb des Führungsschlitzes angeordnet sind. Dies ist eine besonders kompakte und einfach aufgebaute Ausgestaltung. Der Aufnahmeraum für die Linearführung des Antriebsübertragungsstrangs stellt vorzugsweise einen Führungskanal dar, in dem ein drucksteifer Antriebsübertragungsstrang, vorteilhaft in Form einer Gewindewelle (auch Flexwelle genannt), geführt ist.

In weiterer Ausgestaltung der Erfindung sind Wandungen der Aufnahmeräume teilweise durch Karosseriewandungsabschnitte gebildet, die mit der Gehäusekonstruktion in Anlage sind. Bei dieser Ausgestaltung kann die jeweilige Gehäusekonstruktion zur Bildung eines entsprechenden Aufnahmeraums durch entsprechende Karosseriewandungsabschnitte ergänzt sein, an denen die Gehäusekonstruktion anliegt und mit denen die Gehäusekonstruktion fest verbunden sein kann. Dadurch kann die Gestaltung der Gehäusekonstruktion vereinfacht und an vorhandene Einbauräume innerhalb eines Personenkraftwagens angepasst sein.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch einen Teil eines Personenkraftwagens im Bereich einer Heckscheibenanordnung, der fahrzeuginnenraumseitig einer Ausführungsform einer erfindungsgemäßen Beschattungsvorrichtung zugeordnet ist,
- Fig. 2: die Darstellung nach Fig. 1, bei der die Beschattungsvorrichtung in ihre Beschattungsstellung überführt ist,
- Fig. 3: in vergrößerter perspektivischer Darstellung einen Ausschnitt der Beschattungsvorrichtung nach den Fig. 1 und 2,
- Fig. 4: in anderer perspektivischer Darstellung die Beschattungsvorrichtung nach Fig. 3,
- Fig. 5: in einer Seitenansicht die Beschattungsvorrichtung gemäß den Fig. 1 bis 4,
- Fig. 6: in vergrößerter, schematischer Querschnittsdarstellung einen Teilbereich der Beschattungsvorrichtung nach den Fig. 1 bis 5,
- Fig. 7: eine weitere Querschnittsdarstellung der Beschattungsvorrichtung in einer zu der Schnittebene nach Fig. 6 parallelen Schnittebene,
- Fig. 8: in einer weiteren Querschnittsdarstellung in einer weiteren, zu den Darstellungen nach Fig. 6 und 7 parallelen Schnittebene einen Teilbereich der Beschattungsvorrichtung nach den Fig. 1 bis 7 und
- Fig. 9: schematisch ein Beschattungsgebilde der Beschattungsvorrichtung nach den Fig. 1 bis 8.

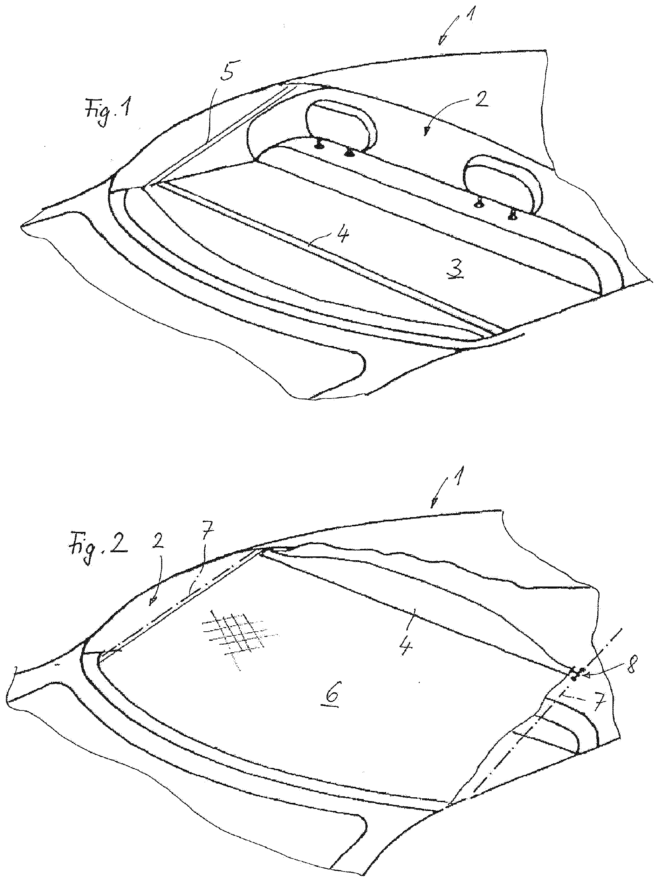

Ein Personenkraftwagen 1 weist gemäß den Fig. 1 und 2 eine Heckscheibenanordnung 2 auf, die einen Fahrzeuginnenraum oberhalb einer Fahrzeugbordkante nach hinten begrenzt. Im Fahrzeuginnenraum ist unterhalb der Heckscheibenanordnung 2 eine Hutablage 3 vorgesehen, die Teil einer tragenden Karosseriestruktur des Personenkraftwagens 1 sein kann. Nach vorne schließt an die Hutablage 3 eine Rückenlehnenanordnung einer Fondsitzbank an.

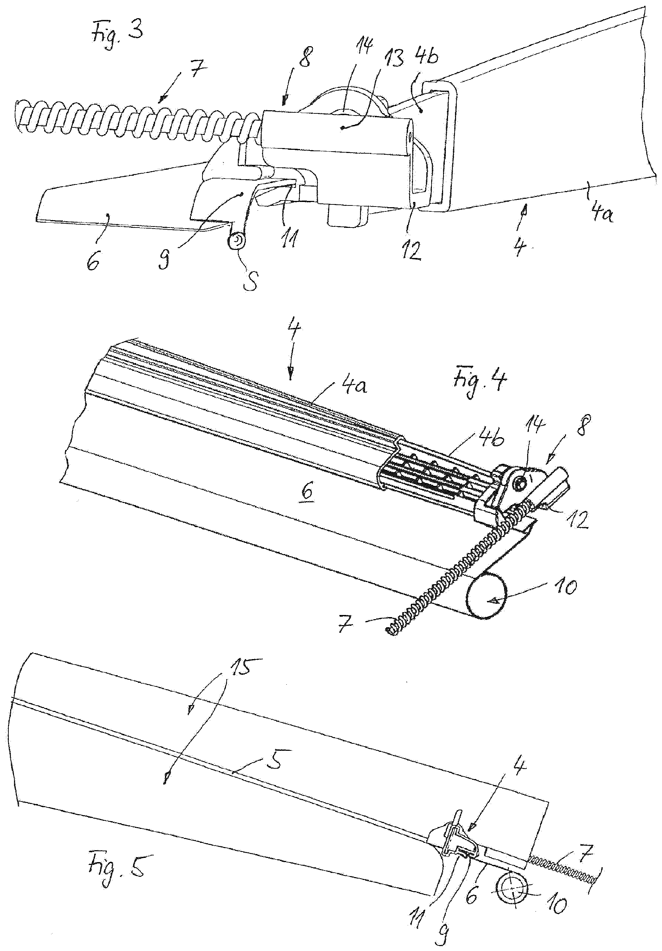

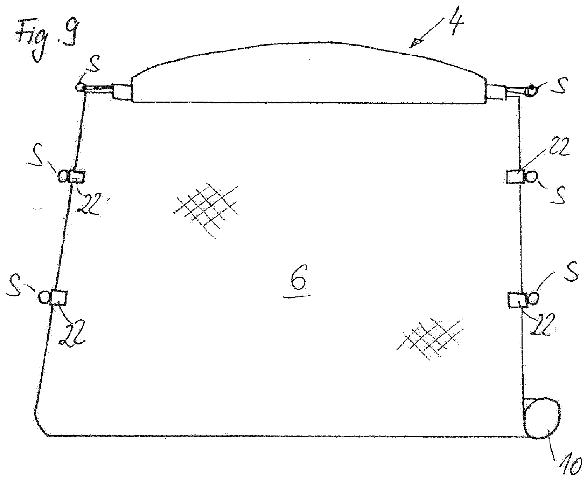

Um durch die Heckscheibenanordnung 2 von außen hindurchtretende Lichtstrahlung zu reduzieren, ist der Heckscheibenanordnung 2 eine Beschattungsvorrichtung gemäß den Fig. 1 bis 9 zugeordnet, die nachfolgend näher beschrieben wird. Die Beschattungsvorrichtung weist ein flexibles Beschattungsgebilde 6 auf, das bahnförmig auf einer Wickelwelle 10 auf- und abwickelbar gehalten ist. Die Wickelwelle 10 ist unterhalb der Hutablage 3 mit in Fahrzeugquerrichtung erstreckter Drehachse drehbar gelagert. Im Bereich der Hutablage 3 ist ein nicht näher dargestellter Durchtrittsschlitz vorgesehen, durch den das Beschattungsgebilde 6 bei einer Überführung aus der Ruhestellung (Fig. 1) in die Beschattungsstellung (Fig. 2) hindurchgeführt wird. Das Beschattungsgebilde 6 weist eine zumindest im Wesentlichen rechteckige Form auf und wird in mehreren Lagen gleichmäßig auf die Wickelwelle 10 aufgewickelt. An einem in Auszugrichtung vorderen Stirnendbereich ist das Beschattungsgebilde 6 an einem Auszugprofil 4 befestigt, das sich über die gesamte Breite des Beschattungsgebildes 6 erstreckt. Das Auszugprofil 4 ist an seinen gegenüberliegenden Stirnenden mithilfe jeweils eines Führungsschlittens 8 (Fig. 3 und 4) in fahrzeugfesten seitlichen Führungsanordnungen längsverschiebbar gehalten. Die fahrzeugfesten seitlichen Führungsanordnungen sind, wie anhand der Fig. 1 und der Fig. 2 erkennbar ist, im Bereich von C-Säulenabschnitten der Karosserietragstruktur befestigt. Jede seitliche Führungsanordnung weist einen zur Fahrzeugmitte hin offenen Führungsschlitz 5 auf, dessen Gestaltung und Funktion nachfolgend näher beschrieben wird. Der Führungsschlitz 5 ist vorzugsweise jeweils bündig in ein Innenraumverkleidungsteil integriert, das im Bereich des jeweiligen C-Säulenabschnittes angeordnet ist.

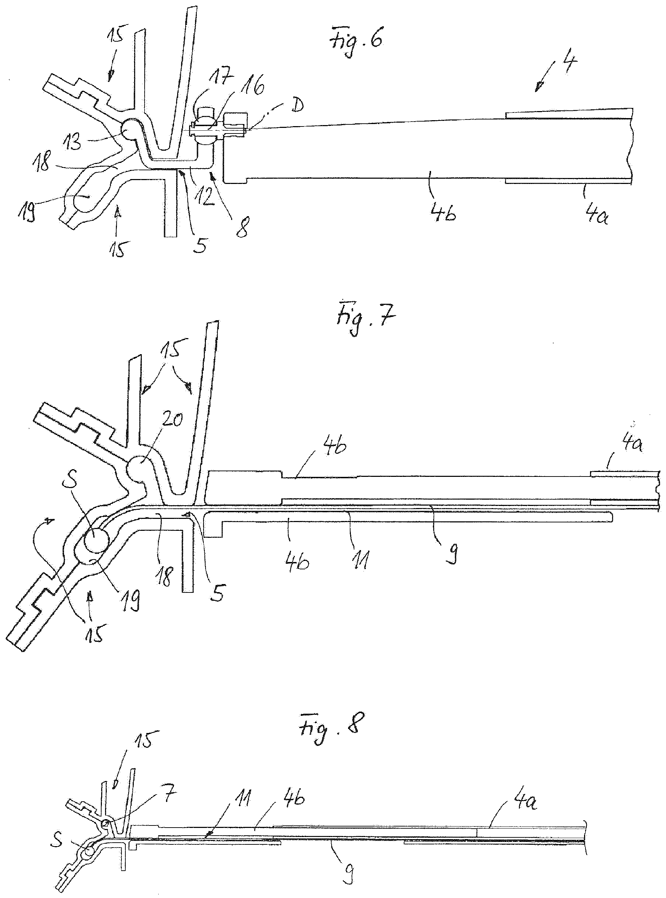

Das Auszugprofil 4 setzt sich aus einem als Hohlprofil gestalteten Mittelteil 4a und zwei auf gegenüberliegenden Seiten des Mittelteils 4a angeordneten seitlichen Teleskopabschnitten 4b zusammen, die in dem Mittelteil 4a längsverschiebbar geführt sind. Die Führungsschlitten 8 sind stirnseitig mit dem jeweiligen Teleskopabschnitt 4b verbunden. Die beiden Teleskopabschnitte 4b sind in Längsrichtung des Auszugprofils 4 verschiebbar in dem Mittelteil 4a gelagert, um die Gesamtlänge des Auszugprofils 4 verändern zu können. Die Veränderung der Gesamtlänge des Auszugprofils 4 ist notwendig, da die seitlichen Führungsanordnungen wie auch die Führungsschlitze 5 nicht-parallel zueinander verlaufen, sondern zur Mitte hin geneigt sind und demzufolge ausgehend von der Hutablage 3 in Richtung zum Dachhimmel des Fahrzeuginnenraums aufeinander zulaufen. Das Auszugprofil 4 ist über seine beiden Teleskopabschnitte 4b mittels jeweils einer Kugelgelenkanordnung 14 drehbar relativ zu den beiden Führungsschlitten 8 gelagert. Die beiden Kugelgelenkanordnungen 14 definieren für das Auszugprofil 4 eine Drehachse D relativ zu den gegenüberliegenden Führungsschlitten 8, die exzentrisch zu einer Mittellängsachse des Auszugprofils 4 angeordnet ist. Die Kugelgelenkanordnung 14 umfasst, wie anhand der Fig. 6 erkennbar ist, zum einen einen koaxial zu der Drehachse D von dem Teleskopabschnitt 4b seitlich nach außen abragenden Lagerzapfen 16 und zum anderen ein im Führungsschlitten 8 gelagertes Kugelgelenk 17, in das der Lagerzapfen 16 koaxial eingreift. Ein nicht näher bezeichneter Axialsicherungsring sichert den Lagerzapfen 16 axial am Kugelgelenk 17.

Der Führungsschlitten 8 weist einen seitlich nach außen ragenden Führungsfortsatz 12 auf, der nach oben abgewinkelt ist und in einen zylinderartigen Führungskörper 13 übergeht, mit dem ein drucksteifer Antriebsübertragungsstrang in Form einer Flexwelle 7 koaxial verbunden ist (Fig. 3 und 4). Die Flexwelle 7 wird in nicht näher dargestellter Weise synchron mit der gegenüberliegenden Flexwelle 7 durch ein Zahnradgetriebe längsverschiebbar angetrieben, das durch einen elektrischen Antriebsmotor beaufschlagt wird.

Beide seitlichen Führungsanordnungen sowie beide Seiten des Auszugprofils 4 und beide Seiten des Beschattungsgebildes 6 sind spiegelsymmetrisch, im Übrigen jedoch identisch zueinander gestaltet, so dass zur Vermeidung von Wiederholungen lediglich eine Seite ausführlich beschrieben wird.

Der Führungskörper 13 des Führungsschlittens 8 ist in einem Führungskanal 20 der fahrzeugfesten seitlichen Führungsanordnung linearverschiebbar geführt, die als Aufnahmeraum im Sinne der Erfindung dient. Der Führungskanal 20 führt zudem auch die jeweilige Flexwelle 7. Der seitlich nach außen ragende Führungsfortsatz 12 des Führungsschlittens 8 ragt in den Führungsschlitz 5 hinein, der zu dem nach oben führenden Führungskanal 20 hin offen ist. An den Führungsschlitz 5 schließt zudem seitlich nach außen sowie nach unten ein schmaler Aufnahmeraum 18 an, der einen erweiterten Stützkanalabschnitt 19 umfasst. Sowohl der Führungsschlitz 5 als auch der Führungskanal 20, der Aufnahmeraum 18 und der Stützkanalabschnitt 19 erstrecken sich in Längsrichtung des Beschattungsgebildes 6 gesehen durchgängig wenigstens über einen gesamten Verfahrweg des Auszugprofils 4 und damit über den Verlagerungsweg des Beschattungsgebildes 6 zwischen seiner Ruhestellung (Fig. 1) und seiner Beschattungsstellung (Fig. 2).

Der Führungsschlitz 5, der Führungskanal 20, der Aufnahmeraum 18 und der Stützkanalabschnitt 19 sind in einer Gehäusekonstruktion 15 integriert, die aus mehreren, miteinander verbundenen Schalenabschnitten besteht. Die Schalenabschnitte können aus Kunststoff oder aus Metall hergestellt sein. Anhand der Fig. 6 bis 8 ist erkennbar, dass die Gehäusekonstruktion 15 aus drei miteinander verbundenen Schalenabschnitten besteht, die fahrzeugfest montiert sind, indem sie insbesondere mit anschließenden Fahrzeuginnenraumverkleidungsteilen und/oder tragenden Karosserieteilen fest verbunden sind.

Das Beschattungsgebilde 6 ist mit dem Auszugprofil 4 verbunden über ein Querführungsband 9, dass sich durchgängig über eine gesamte Breite des Beschattungsgebildes 6 quer zur Auszugrichtung des Beschattungsgebildes 6 erstreckt. Das Querführungsband 9 weist eine höhere Steifigkeit auf als das flexible Beschattungsgebilde 6 und ist aus einem PTFE-Band mit einer Breite von 10 mm und einer Dicke von 0,5 mm hergestellt. Das Querführungsband 9 ist durch Verklebung oder durch Einnähen in eine stirnseitige Schlaufe mit dem vorderen Stirnendbereich des Beschattungsgebildes 6 über die gesamte Breite des Beschattungsgebildes 6 durchgängig verbunden. Das Querführungsband 9 ist an dem Auszugprofil 4 gehalten, indem es in einen Aufnahmeschlitz des Mittelteils 4a des Auszugprofils 4 formschlüssig eingebracht ist. Das Querführungsband 9 ist zudem auch mit seinen seitlichen Führungsbandabschnitten, die im Bereich der Teleskopabschnitte 4b des Auszugprofils 4 erstreckt sind, mit dem Auszugprofil 4 verbunden. Hierzu ist jeder Teleskopabschnitt 4b mit einem Gleitführungskanal 11 versehen, in dem der jeweilige seitliche Führungsbandabschnitt des Querführungsbands 9 linearbeweglich gestützt ist. Der Querführungskanal 11 erstreckt sich über eine maximale Auszuglänge des Teleskopabschnitts 4b relativ zum Mittelteil 4a, so dass das Querführungsband 9 zumindest weitgehend über eine gesamte Breite des Auszugprofils 4 linearbeweglich gestützt ist.

Das Querführungsband 9 weist an seinen gegenüberliegenden Stirnenden seitlich außerhalb des jeweiligen Längsrands des Beschattungsgebildes 6 einen Laschenfortsatz auf, an dem ein perlenartiger Stützkörper S angespritzt oder in anderer Art und Weise befestigt ist. Dieser Stützkörper S ist in den Stützkanalabschnitt 19 der Gehäusekonstruktion 15 in Längsrichtung des Beschattungsgebildes 6 eingeführt und verhindert, dass das Querführungsband 9 durch eine zur Fahrzeugmitte hin gewandte Querkraft aus dem Stützkanalabschnitt 19 herausgezogen werden kann. Denn die Verjüngung des Aufnahmeraumes am Übergang vom Stützkanalabschnitt 19 zum schmalen Aufnahmeraum 18 bewirkt eine formschlüssige Stützung der Stützkörper S in Querrichtung. Das Querführungsband 9 ist mit seinen seitlichen Führungsbandabschnitten im Führungsschlitz 5 und im Aufnahmeraum 18 nach unten gekrümmt und führt hiermit die anschließenden seitlichen Beschattungsgebildeabschnitte des Beschattungsgebildes 6 bei einer Längsverlagerung des Auszugprofils 4 längs der Führungsschlitze 5 in den Aufnahmeraum 18 und in den Strömungskanalabschnitt 19 hinein. Der Aufnahmeraum 18 und der Strömungskanalabschnitt 19 speichern demzufolge bei einer Verlagerung des Beschattungsgebildes 6 aus der Ruhestellung in die Beschattungsstellung die seitlich in den Führungsschlitz 5 hineingeführten Beschattungsgebildeabschnitte des rechteckigen Beschattungsgebildes. Das Eintreten und Hindurchtreten der seitlichen Beschattungsgebildeabschnitte durch den jeweiligen Führungsschlitz 5 erfolgt analog dem Stand der Technik (EP 1 800 922 B1) aufgrund der aufeinander zulaufenden, fahrzeugfesten seitlichen Führungsanordnungen und Führungsschlitze 5 einerseits und dem Parallelverlauf der seitlichen Längsränder des rechteckigen Beschattungsgebildes andererseits beim Auf- oder Abwickeln des Beschattungsgebildes 6 durch eine Längsverlagerung des Auszugprofils 4.

Wie anhand der Fig. 5 erkennbar ist, bildet das mit dem Beschattungsgebilde 6 stirnseitig verbundene Querführungsband 9 einen Keder, der in den als Kedernut gestalteten Aufnahmeschlitz des Mittelteils 4a formschlüssig eingeführt ist. Auch die Gleitführungskanäle 11 der Teleskopabschnitte 4b bilden kederartige Nuten mit dem Unterschied, dass im Bereich der Gleitführungskanäle 11 die Teleskopabschnitte 4b relativ zum Querführungsband 9 längsverschiebbar angeordnet sind.

Anhand der Fig. 5 wie auch anhand der Fig. 1 ist erkennbar, dass die Führungsschlitze 5 in jeder Gehäusekonstruktion 15 zum einen geradlinig und zum anderen in der Ausziehebene des Beschattungsgebildes 6 verlaufen. Der Aufnahmeschlitz des Mittelteils 4a und die Gleitführungskanäle 11 der Teleskopabschnitte 4b fluchten in Längsrichtung des Auszugprofils 4 miteinander, so dass sich eine geradlinige und ebene Stützung des Querführungsbands 9 ergibt. Diese kederartige Aufnahme des Querführungsbands 9 im Auszugprofil 4 ist in Abstand zu der Drehachse D vorgesehen, um die das Auszugprofil 4 an den gegenüberliegenden Führungsschlitten 8 drehbar gelagert ist. Auf das Beschattungsgebilde 6 wird eine permanente Spannkraft ausgeübt, indem in der Wickelwelle 10 eine Rückholfederanordnung integriert ist, die die Wickelwelle 10 in Aufwickelrichtung drehmomentbeaufschlagt. Durch diese Drehmomentbeaufschlagung übt das Beschattungsgebilde 6 mittels des Querführungsbands 9, das im Auszugprofil 4 gehalten ist, ein Drehmoment auf das Auszugprofil 4 um die Drehachse D aus, so dass sich das Auszugprofil 4 in der Ausrichtung gemäß den Fig. 4 und 5 ausrichtet, während das Auszugprofil 4 aus der Ruhestellung in die Beschattungsstellung oder umgekehrt bewegt wird. Der Beschattungsstellung oder der Endstellung können Anschläge zugeordnet sein, die die Drehmomentbeaufschlagung des Auszugprofils 4 ausgleichen und das Auszugprofil 4 in der entsprechenden Endstellung in eine andere Ausrichtung relativ zu den Führungsschlitten 8 verschwenken.

Um auch im weiteren Verlauf der Länge des Beschattungsgebildes 6 ein ungewünschtes Herausziehen der seitlichen Beschattungsgebildeabschnitte aus dem entsprechenden Aufnahmeraum 18, 19 mit der jeweiligen Gehäusekonstruktion 15 zu vermeiden, sind über die Länge des Beschattungsgebildes 6 verteilt auf jeder Seite dem jeweiligen seitlichen Längsrand des Beschattungsgebildes 6 weitere zwei Stützkörper S zugeordnet, die über Befestigungslaschen 22 mit den seitlichen Beschattungsgebildeabschnitten verbunden sind. Auch die Stützkörper S sind perlenartig gestaltet und in ihren Abmessungen auf den Stützkanalabschnitt 19 so abgestimmt, dass sie spielbehaftet in diesem längsverlagerbar sind. Bei einer Verlagerung des Beschattungsgebildes 6 mittels des Auszugprofils 4 in den Führungsschlitzen 5 der Gehäusekonstruktionen 15 gleiten auch die weiteren Stützkörper S in die Stützkanalabschnitte 19 hinein, so dass sich im Wesentlichen über die gesamte Auszuglänge des Beschattungsgebildes 6 eine Querstützung ergibt, die ein Herausgleiten aus dem jeweiligen Führungsschlitz 5 zuverlässig vermeidet. Bei einem Aufwickeln des Beschattungsgebildes 6 auf die Wickelwelle 10 werden die Stützkörper S mit den Befestigungslaschen 22 zwangsläufig außerhalb des jeweiligen Stirnrands der Wickelwelle 10 mit aufgewickelt, so dass sich keine Veränderung der Dicke der Wickellagen aufgrund dieser Stützkörper S ergibt.

## Patentansprüche

1. Beschattungsvorrichtung für ein transparentes Flächenteil (2) eines Kraftfahrzeugs mit einem flexiblen Beschattungsgebilde (6), das zwischen einer kompakt abgelegten Ruheposition und einer das transparente Flächenteil (2) verdeckenden Beschattungsposition in einem Fahrzeuginnenraum verlagerbar ist, mit zwei fahrzeugfesten, nicht-parallelen seitlichen Führungsanordnungen, die einen Verlagerungsweg des Beschattungsgebildes (6) auf gegenüberliegenden Seiten flankieren, sowie mit einem formstabilen Auszugprofil (4), das an einem in Auszugrichtung vorderen Stirnendbereich des Beschattungsgebildes (6) angeordnet ist, wobei das Auszugprofil (4) an seinen gegenüberliegenden Stirnseiten mittels jeweils eines Führungsschlittens (8) in der jeweiligen seitlichen Führungsanordnung mithilfe von Antriebsmitteln (7) parallel verlagerbar ist, die an den Führungsschlitten (8) angreifen, und wobei seitliche Beschattungsgebildeabschnitte abhängig von dem Verlagerungsweg des Beschattungsgebildes (6) in fahrzeugfeste seitliche Aufnahmeräume (18, 19) eintauchen, die den gegenüberliegenden Führungsanordnungen zugeordnet sind, wobei das Beschattungsgebilde (6) mit dem Auszugprofil (4) über ein Querführungsband (9) verbunden ist, das sich durchgängig über eine gesamte Breite des Beschattungsgebildes (6) quer zur Auszugrichtung des Beschattungsgebildes (6) erstreckt, **dadurch gekennzeichnet, dass** jede seitliche Führungsanordnung und der zugeordnete Aufnahmeraum (18, 19) in jeweils einer fahrzeugfesten Gehäusekonstruktion (15) integriert sind, die einen gemeinsamen Führungsschlitz (5) für einen Durchtritt des Führungsschlittens (8) vom Auszugprofil (4) zum Antriebsmittel (7) und des jeweiligen seitlichen Beschattungsgebildeabschnitts zum Aufnahmeraum (18, 19) aufweist, wobei der Führungsschlitz (5) längs des Verlagerungswegs des Beschattungsgebildes (6) verläuft und zu diesem hin offen ist.

2. Beschattungsvorrichtung nach Anspruch 1, **dadurch gekennzeichnet, dass** in jeder Gehäusekonstruktion (15) ein Aufnahmeraum (20) für eine Linearführung eines Antriebsübertragungsstrangs (7) der Antriebsmittel und ein Aufnahmeraum (18, 19) für das Eintauchen des Querführungsbandes (9) und des jeweiligen seitlichen Beschattungsgebildeabschnitts vorgesehen sind, wobei der Aufnahmeraum (20) für den Antriebsübertragungsstrang oberhalb des Führungsschlitzes (5) und der Aufnahmeraum (18, 19) für den Beschattungsgebildeabschnitt seitlich benachbart oder unterhalb des Führungsschlitzes (5) angeordnet sind.

3. Beschattungsvorrichtung nach Anspruch 1 oder 2, **dadurch gekennzeichnet, dass** an den Führungsschlitz (5) seitlich nach außen und nach unten ein schmaler Aufnahmeraum (18) anschließt, der einen erweiterten Stützkanalabschnitt (19) umfasst.

4. Beschattungsvorrichtung nach Anspruch 3, **dadurch gekennzeichnet, dass** das Querführungsband (9) an seinen gegenüberliegenden Stirnenden seitlich außerhalb des jeweiligen Längsrandes des Beschattungsgebildes (6) einen Laschenfortsatz aufweist, an dem ein perlenartiger Stützkörper (S) befestigt ist, der in den Stützkanalabschnitt (19) der Gehäusekonstruktion (15) in Längsrichtung des Beschattungsgebildes (6) eingeführt ist.

5. Beschattungsvorrichtung nach Anspruch 1, **dadurch gekennzeichnet, dass** die gegenüberliegenden Führungsschlitze (5) jeweils zumindest weitgehend geradlinig erstreckt und in einer gemeinsamen Ebene angeordnet sind, die einer Ausziehebene des Beschattungsgebildes (6) zwischen der Ruheposition und der Beschattungsposition entspricht.

6. Beschattungsvorrichtung nach Anspruch 5, **dadurch gekennzeichnet, dass** die Führungsschlitze (5) zu den Aufnahmeräumen (18, 19, 20) der Gehäusekonstruktionen (15) hin offen sind.

7. Beschattungsvorrichtung nach einem der vorhergehenden Ansprüche, **dadurch gekennzeichnet, dass** Wandungen der Aufnahmeräume (18 bis 20) teilweise durch Karosseriewandungsabschnitte gebildet sind, die mit der Gehäusekonstruktion (15) in Anlage sind.

## Claims

1. Shading device for a transparent surface part (2) of a motor vehicle, having a flexible shading structure (6) which can be displaced in a vehicle interior between a rest position, in which it is stowed in a compact manner, and a shading position, in which it covers the transparent surface part (2), having two non-parallel lateral guide arrangements which are fixed with respect to the vehicle and which flank a displacement travel of the shading structure (6) on opposite sides, and having a dimensionally stable pull-out profile (4) which is arranged on a front face end region of the shading structure (6) as viewed in the pulling-out direction, the pull-out profile (4), at its opposite face sides, being displaceable in parallel fashion by means of in each case one guide carriage (8) in the respective lateral guide arrangement by way of drive means (7) which engage on the guide carriages (8), and lateral shading structure sections protruding, in a manner dependent on the displacement travel of the shading structure (6), into lateral receiving spaces (18, 19) which are fixed with respect to the vehicle and which are assigned to the opposite guide arrangements, the shading structure (6) being connected to the pull-out profile (4) via a transverse guidance strip (9) which extends continuously over an entire width of the shading structure (6) transversely with respect to the pulling-out direction of the shading structure (6),
**characterized in that**
each lateral guide arrangement and the associated receiving space (18, 19) are integrated in in each case one housing structure (15) which is fixed with respect to the vehicle and which has a common guide slot (5) for passage of the guide carriage (8) from the pull-out profile (4) to the drive means (7) and of the respective lateral shading structure section to the receiving space (18, 19), wherein the guide slot (5) runs along the displacement travel of the shading structure (6) and is open toward the latter.

2. Shading device according to claim 1, **characterized in that** in each housing structure (15), there is provided a receiving space (20) for a linear guide of a drive transmission strand (7) of the drive means and a receiving space (18, 19) for the transverse guidance strip (9) and the respective lateral shading structure section to protrude into, wherein the receiving space (20) for the drive transmission strand is arranged above the guide slot (5) and the receiving space (18, 19) for the shading structure section is arranged laterally adjacent to or below the guide slot (5).

3. Shading device according to claim 1 or 2, **characterized in that** the guide slot (5) is adjoined laterally to the outside and in the downward direction by a narrow receiving space (18) which comprises a widened support channel section (19).

4. Shading device according to claim 3, **characterized in that** the transverse guidance strip (9) has, at its opposite face ends laterally outside the respective longitudinal edge of the shading structure (6), a tab projection onto which a pearl-like support body (S) is fastened and is inserted into the support channel section (19) of the housing structure (15) in the longitudinal direction of the shading structure (6).

5. Shading device according to claim 1, **characterized in that** the opposite guide slots (5) extend in each case at least largely rectilinearly and are arranged in a common plane which corresponds to a pulling-out plane of the shading structure (6) between the rest position and the shading position.

6. Shading device according to claim 5, **characterized in that** the guide slots (5) are open toward the receiving spaces (18, 19, 20) of the housing structures (15).

7. Shading device according to any of the preceding claims, **characterized in that** walls of the receiving spaces (18 to 20) are formed partially by body wall sections which are in contact with the housing structure (15).

## Revendications

1. Dispositif d'ombrage pour une partie plate (2) transparente d'un véhicule automobile avec une structure d'ombrage (6) flexible qui est déplaçable dans un intérieur de véhicule entre une position de repos compactement entreposé et une position d'ombrage recouvrant la partie plate (2) transparente, avec deux non-parallèles arrangements de guidage latérals fixés au véhicule, lesdits arrangements encadrant un trajet de déplacement de la structure d'ombrage (6) sur des côtés opposés, ainsi qu'avec un profilé d'extraction dimensionnellement stable (4) disposé sur une région de face d'extrémité avant dans la direction d'extraction de la structure d'ombrage (6), dans lequel le profilé d'extraction (4) est déplaçable en parallèle par le biais de moyens d'entraînement (7) sur ses faces latérales opposées respectivement par un chariot de guidage (8) dans l'arrangement de guidage latéral respectif, les moyens d'entraînement (7) engageant sur les chariots de guidage (8), et dans lequel des sections de la structure d'ombrage latérales entrent dans des espaces de réception (18, 19) latérals fixés au véhicule et associés aux arrangements de guidage opposés en fonction du trajet de déplacement de la structure d'ombrage (6), dans lequel la structure d'ombrage (6) est raccordée au profilé d'extraction (4) par une bande de guidage transversale (9) s'étendant continuellement à travers une largeur totale de la structure d'ombrage (6) transversalement par rapport à la direction d'extraction de la structure d'ombrage (6),
**caractérisé en ce que**
chaque arrangement de guidage latéral et l'espace de réception (18, 19) associé sont intégrés respectivement dans une construction de boîtier (15) fixée au véhicule, présentant une fente de guidage commune (5) pour un passage du chariot de guidage (8) à partir du profilé d'extraction (4) vers le moyen d'entraînement (7) et de la section de la structure d'ombrage latérale respective vers l'espace de réception (18, 19), dans lequel la fente de guidage (5) suit le long du trajet de déplacement de la structure d'ombrage (6) et est ouverte par là.

2. Dispositif d'ombrage selon la revendication 1, **caractérisé en ce que** dans chaque construction de boîtier (15) sont prévus un espace de réception (20) pour un guidage linéaire d'un ensemble de transmission (7) des moyens d'entraînement et un espace de réception (18, 19) pour l'entrée de la bande de guidage transversale (9) et de la section de la structure d'ombrage latérale respective, dans lequel l'espace de réception (20) pour l'ensemble de transmission est disposé au-dessus de la fente de guidage (5) et l'espace de réception (18, 19) pour la section de la structure d'ombrage est disposé latéralement adjacent ou en dessous de la fente de guidage (5).

3. Dispositif d'ombrage selon la revendication 1 or 2, **caractérisé en ce qu'**un espace de réception (18) étroit, comprenant une section de canal de support (19) élargie, jouxte la fente de guidage (5) latéralement vers extérieur et vers le bas.

4. Dispositif d'ombrage selon la revendication 3, **caractérisé en ce que** la bande de guidage transversale (9) présente, sur ses faces d'extrémité opposées latéralement hors du bord longitudinal respectif de la structure d'ombrage (6), un prolongement de patte sur lequel un corps de support (S) du type de perle est fixé et inséré dans la section de canal de support (19) de la construction de boîtier (15) dans la direction longitudinale de la structure d'ombrage (6).

5. Dispositif d'ombrage selon la revendication 1, **caractérisé en ce que** les fentes de guidage (5) opposées s'étendent respectivement au moins largement en rectiligne et sont disposés dans un plan commun correspondant à un plan d'extraction de la structure d'ombrage (6) entre la position de repos et la position d'ombrage.

6. Dispositif d'ombrage selon la revendication 5, **caractérisé en ce que** les fentes de guidage (5) sont ouvertes vers les espaces de réception (18, 19, 20) de la construction de boîtier (15).

7. Dispositif d'ombrage selon l'une quelconque des revendications précédentes, **caractérisé en ce que** des parois d'espaces de réception (18 à 20) sont composées partiellement par des sections de paroi de la carrosserie en contact avec la construction de boîtier (15).
